# EUROPEAN PATENT SPECIFICATION

(11) **EP 0 365 505 B1**
(45) Date of publication and mention of the grant of the patent: **04.05.1994**
(21) Application number: 89850350.3
(22) Date of filing: 13.10.1989
(51) Int. Cl.: B22F 7/06, B23P 11/00

(54) **Cutting insert and method of manufacturing such insert**
Schneidplatte und Verfahren zu deren Herstellung
Plaquette de coupe et son procédé de fabrication

(30) Priority: 21.10.1988 SE 8803769
(43) Date of publication of application: 25.04.1990
(73) Proprietor: SANDVIK AKTIEBOLAG, 811 81 Sandviken (SE)
(72) Inventor: Johansson, Jan-Erik, S-810 25 Ashammar (SE); Lagerberg, Stig E.V., S-811 52 Sandviken (SE); Pettersson, Lars T., Glen Rock, N.J. 07452 (US); Silver, Bengt, S-126 55 Hägersten (SE)
(74) Representative: Taquist, Lennart

(56) References cited:
- EP-A- 0 232 711
- DE-A- 3 810 032
- FR-A- 1 522 955
- US-A- 3 429 700
- US-A- 4 544 517
- US-A- 4 594 219
- US-A- 4 722 824

## Description

The present invention relates to a cutting insert and a method of manufacturing such an insert, according to appended claims 1 and 9.

Due to complicated insert geometries it has not previously been practically possible to use conventional press tools for pressing inserts having a double-positive geometry, i.e. double-sided inserts having top faces which intersect with adjacent side faces at acute angles. If such previously used double positive inserts would be directly pressed in conventional press tools it would not be possible, without causing damage, to release the powder body from its tool after completion of the pressing.

In FR-A-1522955 a method of assembling two portions made of sintered metal powder is described. In accordance with this method two pieces are provided with compatible protrusions and recesses and the pieces are pressed together such that said protrusions and recesses are getting locked together by plastic deformation. These two pieces are not identical in shape and therefore two different types of press tools must be used in manufacture which makes this method time-consuming. Time-consumption is also extended due to the fact that braze material is introduced inbetween the pieces before pressing takes place. This method cannot be used for assembling two powder bodies of hard material due to their brittleness before sintering. The plastic deformation will introduce inner stresses into the material which is objectionable when there is production of cemented carbide inserts due to the small resistance towards tensile stresses that is typical for cemented carbide.

In US-A-3 429 700 a pulley wheel is described which is manufactured by joining two sections of substantially identical shape comprising interacting projections and depressions. These two sections are brought together and then sintered. This citation is silent as to hard materials and cutting inserts. Moreover, it does not disclose the production of articles with acute edge angles.

It is therefore a purpose of the present invention to provide a cutting insert which can easily be produced.

It is another purpose to provide a double-sided insert which inherently has necessary clearance angles.

It is another purpose of the invention to provide a simple method for the manufacture of a cutting insert having a complicated geometry.

These and other objects have been achieved by shaping the insert and providing a method of manufacture such as described hereinafter in connection with the appended drawings.

The invention will now be described more in detail in connection with the appending drawings in which:
Fig. 1 is a sectional view of a powder body of the invention taken along line I-I in Fig. 2;
Fig. 2 is an underneath view of the powder body in Fig. 1;
Fig. 3 is a plan view of an insert of the invention;
Fig. 4 is a side view and partly a sectional view of the insert;
Figs. 4A and 4B represent enlarged cross-sectional views taken in Fig. 4,
Fig. 5 is a cross-sectional view of an alternative insert embodiment of the invention.
Fig. 6 is a photograph showing the microstructure of the transition zone in the area A between the two identical bodies at 1000 X after being sintered together.

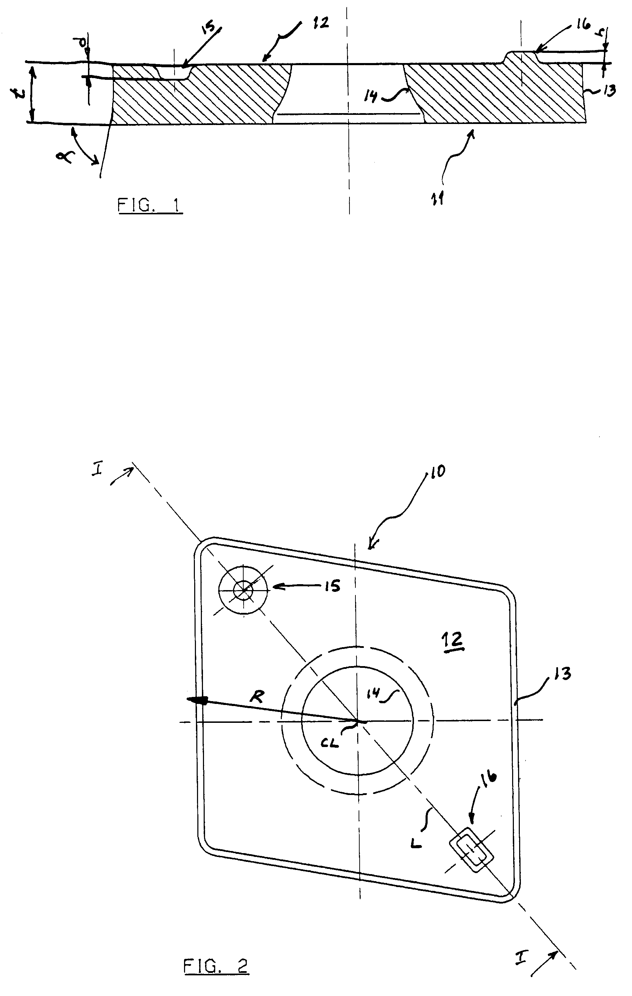

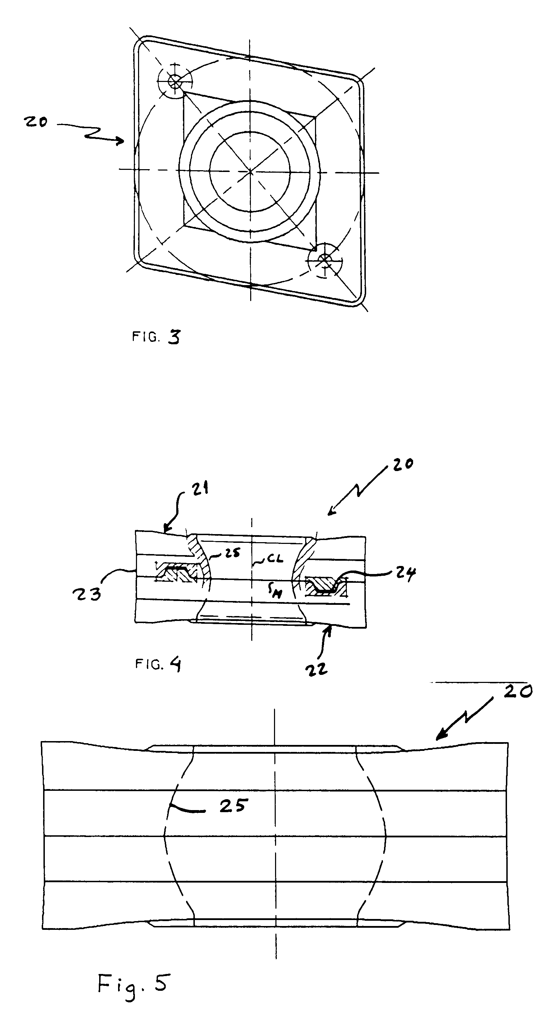

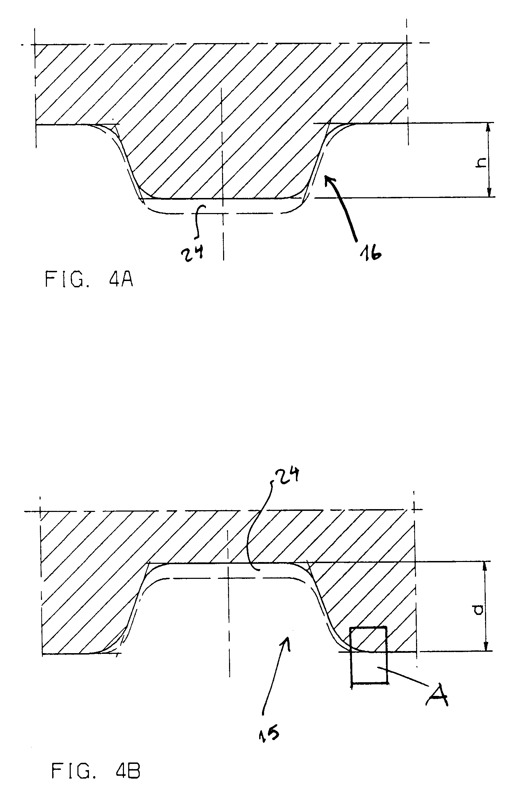

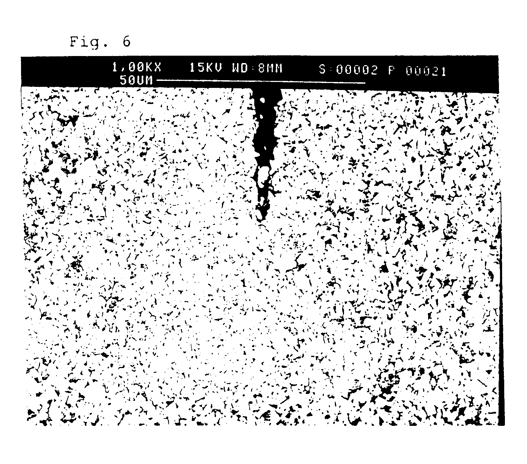

Figs. 1 and 2 show a powder body 10 after being compacted in a press tool (not shown) but before sintering. The powder body consists of a binder material and metal carbides, metal nitrides or ceramic material. The body is a mainly disc-shaped, annularly or polygonally shaped body comprising an upper face 11, a lower face 12 and at least one side surface 13 connecting said upper and lower faces. The upper face 11 intersects each side surface 13 to define an acute edge angle α. The body 10 has a central aperture 14. The upper face might include directly pressed profiles such as chip formers the design of which can be freely chosen. The lower face 12 is mainly planar and comprises, in this ilustrated case, a recess 15 and a protrusion 16. Alternatively one or several recesses and protrusions might have been provided. The recess 15 has a circular cross-section and is provided with decreasing diameter from the lower face 12 to the upper face 11. The recess has a depth **d** which should not exceed 1/4 of the thickness **t** of the body. The protrusion 16 which can have a cross-section complementary to that of said recess is in this case provided with approximately polygonal cross-section the dimension of which decreases in a direction from the lower face 12. The protrusion is therefore in the shape of a truncated pyramid. The height **h** of the protrusion above the lower face is max. 1/4 of the thickness **t** of the body whilst being somewhat less than the depth **d** of the recess 15. The protrusion is provided with smoothly rounded corner portions which, as seen in a cross-section parallel with said lower face, are positioned on a circle the diameter of which is less than the diameter of the recess when taken in a corresponding cross-section. The recess and the protrusion are positioned on a circle **C** the centre point of which coincides with the centre **CL** of the body 10. The radius **R** of the circle **C** is preferably larger than the radius of a standardized inscribed circle of said body. A straight line **L** can be drawn such that it intersects with said protrusion, said recess and the centre **CL** in bodies with four corners, such as a body of rhombic or square shape. With a body of triangular basic shape such line **L** would not pass through the centre **CL** of said body.

The body can be assembled with an identically shaped second powder body and subsequently sintered therewith thereby becoming suitable for chipforming machining.

The method of manufacturing an insert 20 of the invention is exercised in the following manner whereby reference is made to Figs. 1 to 4B. The compaction chamber of a conventional press is first filled with powder. This conventional press is only useful for pressing inserts of negative form or simple positive form. The punch and the die of the press which have profiles which are inverted in relation to those of the desired profiles are displaced towards each other so that the powder is compacted or packed. A brittle body 10 consisting of such powder having desired geometry can be removed from the chamber in a conventional way. The pressing procedure which lasts a few seconds is repeated so that two identical powder bodies are obtained. The lower sides 12 of said bodies 10 are oriented towards each other and one body is rotated in the plane of said lower side said rotation being 180° angular rotation in relation to said other body such that the recess 15 and the protrusion 16 are linearly oriented to each other. The bodies are thereafter displaced towards each other so that the protrusions are received in said recesses without there being anything more than a contact between a minor portion of each body, i.e. line contact is established between the wall of the recess and the corners of the protrusion. When the lower sides are thus in contact with each other such package is inserted into a furnace for heating it to sintering temperature so that a sintering occurs, i.e. the lower sides of the bodies and the protrusion and corresponding recess are metallurgically bound together. The normal sintering condition for cemented carbides consisting of 8-10 % Co, 3-10 % TiC + TaC + NbC, rest WC is a temperature of 1350 - 1500°C in vacuum for a time period of 0.5 - 2h. This method makes possible the production of negative inserts having fastening holes which have a decreasing diameter of cross-section towards side surfaces 21 and 22 whilst making possible the provision of a channel system inside the insert around its intermediate plane.

Figs. 3 to 4B show a completely sintered insert 20 according to the invention. The insert 20 consists of two identical powder bodies which have been assembled and sintered together. The insert has a double-positive shape which means that upper faces 21 and the lower faces 22 are located at an acute angle α at their intersection with the edge faces 23. The edge faces 23 might be planar or non-planar. Hence, the insert is composed of two identical halves metallurgically bound to each other mainly along the central middle plane **M** of the insert. There is a remaining play 24 between the recess 15 and the protrusion 16 due to the fact that the height **h** of said protrusion 16 is about 0.1 mm less than the depth of said recess. The existence of such play 24 promotes an accurate plane abutment between the lower sides of said halves in connection with the sintering. This play 24 might communicate with edge surface 23 via a channel for the purpose of receiving sensors such as electronic circuits in micro scale for measurement of mechanical and/or thermal stresses. Alternatively, special voids might be provided in the middle plane **M** for housing such sensors. Additionally, channels for instance for transport of cooling media could simply be arranged at the middle plane **M** by providing slots in the powder body 10 in connection with compacting said body. The insert has a central aperture 25 symmetrically around its central axis **CL** with convexly decreasing cross-sectional diameter towards the middle plane **M**. Alternatively this aperture could as shown in Fig. 5 have a concavely increasing diameter towards the middle plane.

Hence, the present invention provides a cutting insert, and method for its manufacture whereby a powder body when assembled and sintered together with a similar body can be utilized for chipforming machining whereby said insert makes possible the use of a double positive geometry so that this method also makes possible the usage of new forms of holes and inclusion of measurement sensors therein.

### Example

Compacts according to Fig. 1 - 3 with projections and depressions on the lower side were prepared in four different compositions. Compacts of the same composition were brought together in pairs and then sintered in a laboratory furnace under the following conditions:

| Composition | Sintering conditions |
|---|---|
| 8 % Co, rest WC | 1410°C, 1h, vacuum |
| 9.5 % Co, 3.5 % TiC+TaC+NbC, rest WC | 1450°C, 1h, vacuum |
| 5.5 % Co, 8.5 % TiC+TaC+NbC, rest WC | 1450°C, 1h, vacuum |
| 10 % Co, 6 % TiC+TaC+NbC, rest WC | 1450°C, 1h, vacuum |

The sintered compacts were cut and polished and the transition zone between the two original halves was studied in a light microscope and also in a scanning electron microscope. It was found that the two halves had sintered together completely. The transition zone could be seen as a cobalt band with little or no residual porosity. In some instances the transition zone was almost invisible. An example of a transition zone is shown in Fig. 6.

## Claims

1. Cutting insert of hard material for chipforming machining having cutting edges provided at the intersection between opposed upper and lower surfaces (21, 22) and an edge surface (23) located therebetween, said insert being double-sided, characterized in that the insert comprises two identical powder bodies (10) which by means of sintering are metallurgically bound to each other along a middle plane (M), in that each of the two sides abutting at the middle plane (M) includes at least one recess (15) and at least one protrusion (16), which are separated and located on an imaginary circle having a centre which coincides with the centre (CL) of each powder body, and in that said upper and lower surfaces (21, 22) intersect said edge surface (23) at an acute angle (α).

2. Cutting insert according to claim 1, characterized in that the recess (15) and the protrusion (16) have different forms in a cross-sectional view taken parallel with the middle plane (M) and that the dimension of the recess and the protrusion of each of the two powder bodies decreases and increases, respectively, in a direction towards its surface opposite said middle plane.

3. Cutting insert according to claim 1 or 2, characterized in that the recess (15) and the protrusion (16) have equal or complementary shape in a cross-sectional view taken parallel with said middle plane (M) and that the dimension of the recess and the protrusion of each of the two powder bodies decreases and increases, respectively, in a direction towards its surface opposite said middle plane.

4. Cutting insert as defined in any of the previous claims, characterized in that the recess (15), the protrusion (16) and the centre (CL) of each powder body are located on a common straight imaginary line (L).

5. Cutting insert as defined in any of the previous claims, characterized in that the recess (15) has a circular cross-section and a depth (d) in relation to the the abutting side (12) of the concerned powder body and that the protrusion (16) has the form of a truncated pyramid provided at a height (h) relative to said abutting side (12) whereby the relations are such that said depth (d) is larger than said height (h), thereby forming voids (24) in the cutting insert.

6. Cutting insert according to claim 5, characterized int that sensors are provided in said voids (24).

7. Cutting insert according to claim 5 or 6, characterized in that it is provided with a central fastening hole (25) the dimension of which increases or decreases in the direction towards the middle plane (M) and that the voids (24) are arranged in separate locations on opposite sides of the middle plane.

8. Cutting insert as claimed in claim 7, characterized in that the voids (24) communicate with a channel system within the insert.

9. Method of manufacturing a cutting insert such as defined in any of the claims 1 to 8, including the steps of using a press with a compacting chamber said press having a punch and a die, comprising the following steps:
- providing a punch or a die, the active surface of which comprises at least one recess and a protrusion.
- filling a suitable amount of powder in said compacting chamber,
- compacting the powder for obtaining a powder body (10) the lower side (12) of which has a form which is inverted in relation to said punch or die such that distantly provided recess (15) and protrusion (16) are obtained which are oriented such that the recess (15), the protrusion (16) and the centre (CL) of the body (10) are located on a common straight imaginary line (L),
- releasing said powder body from the chamber,
- repeating the last-mentioned three steps to obtain an additional powder body,
- locating the surfaces (12) of said powder bodies (10) such that those surfaces having recess and protrusion are facing each other, angularly displacing them by rotation in the plane of said surfaces,
- orienting the protrusions and the recesses so they are linearly located, and displacing them into mating abutment with each other,
- heating the assembled powder bodies up to a sintering temperature of 1350° - 1500°C in vacuum for a time period of 0.5 - 2h, and
- cooling said sintered body.

## Patentansprüche

1. Schneideinsatz aus Hartmaterial zur spanbildenden Bearbeitung mit Schneidkanten, die an dem Schnitt zwischen gegenüberliegenden oberen und unteren Oberflächen (21,22) und einer Kantenoberfläche (23) vorgesehen sind, die dazwischenliegt, wobei der Einsatz doppelseitig ist, dadurch gekennzeichnet, daß der Einsatz zwei identische Pulverkörper (10) aufweist, die mittels Sintern metallurgisch miteinander entlang einer mittleren Ebene (M) verbunden sind, daß jede der zwei an der mittleren Ebene (M) vorspringenden Seiten mindestens eine Ausnehmung (15) und mindestens einen Vorsprung (16) aufweist, welche getrennt und auf einem imaginären Kreis angeordnet sind, der ein Zentrum hat, welches mit dem Zentrum (CL) jedes Pulverkörpers zusammenfällt, und daß die oberen und unteren Oberflächen (21, 22) die Kantenoberfläche (23) unter einem spitzen Winkel (α) schneidet.

2. Schneideinsatz nach Anspruch 1, dadurch gekennzeichnet, daß die Ausnehmung (15) und der Vorsprung (16) verschiedene Formen in einer Querschnittsansicht haben, die parallel zu der mittleren Ebene (M) genommen ist, und daß die Abmessung der Ausnehmung und des Vorsprunges jedes der zwei Pulverkörper in einer Richtung zu ihrer Oberfläche hin, entgegengesetzt zur mittleren Ebene abnimmt bzw. zunimmt.

3. Schneideinsatz nach Anspruch 1 oder 2, dadurch gekennzeichnet, daß die Ausnehmung (15) und der Vorsprung (16) gleiche oder komplementäre Form haben in einer Querschnittsansicht, die parallel zu der genannten mittleren Ebene (M) genommen ist, und daß die Abmessung der Ausnehmung und des Vorsprunges jedes der zwei Pulverkörper in einer Richtung gegen seine Oberfläche entgegengesetzt zur mittleren Ebene abnimmt bzw. anwächst.

4. Schneideinsatz nach einem der vorangegangenen Ansprüche, dadurch gekennzeichnet, daß die Ausnehmung (15), der Vorsprung (16) und die Mitte (CL) jedes Pulverkörpers auf einer gemeinsamen, geraden gedachten Linie (L) angeordnet sind.

5. Schneideinsatz nach einem der vorangegangenen Ansprüche, dadurch gekennzeichnet, daß die Ausnehmung (15) einen kreisförmigen Querschnitt und eine Tiefe (d) in Bezug auf die vorspringende Seite (12) des entsprechenden Pulverkörpers hat und daß der Vorsprung (16) die Form einer kegelstumpfförmigen Pyramide hat, die mit einer Höhe (h) relativ zur vorspringenden Seite (12) versehen ist, wobei die Verhältnisse derart sind, daß die Tiefe (d) größer als die Höhe (h) ist, wobei Hohlräume (24) in dem Schneideinsatz gebildet sind.

6. Schneideinsatz nach Anspruch 5, dadurch gekennzeichnet, daß Sensoren in den Hohlräumen (24) vorgesehen sind.

7. Schneideinsatz nach Anspruch 5 oder 6, dadurch gekennzeichnet, daß er mit einem zentralen Befestigungsloch (25) versehen ist, dessen Abmessung in Richtung zur mittleren Ebene (M) hin anwächst oder abnimmt, und daß die Hohlräume (24) in getrennten Stellen auf den entgegengesetzten Seiten der mittleren Ebene angeordnet sind.

8. Schneideinsatz wie in Anspruch 7 beansprucht, dadurch gekennzeichnet, daß die Hohlräume (24) mit einem Kanalsystem in dem Einsatz in Verbindung stehen.

9. Verfahren zur Herstellung eines Schneideinsatzes nach einem der Ansprüche 1 bis 8, das die Schritte der Benutzung einer Presse mit einer Verdichtungskammer beinhaltet, wobei die Presse ein Stanzwerkzeug und einen Stempel hat mit folgenden Schritten:
- Vorsehen eines Stanzwerkzeuges oder eines Stempels, deren aktive Oberfläche mindestens eine Ausnehmung und einen Vorsprung aufweist,
- Füllen einer geeigneten Menge an Pulver in die Verdichtungskammer,
- Verdichten des Pulvers, um einen Pulverkörper (10) zu erhalten, dessen untere Seite (12) eine Form hat, die in Bezug auf das Stanzwerkzeug oder den Stempel so umgekehrt ist, daß eine im Abstand vorgesehene Ausnehmung (15) und ein Vorsprung (16) erhalten werden, die so ausgerichtet sind, daß die Ausnehmung (15), der Vorsprung (16) und die Mitte (CL) des Körpers (10) auf einer gemeinsamen, geraden gedachten Linie (L) angeordnet sind,
- Lösen des Pulverkörpers aus der Kammer,
- Wiederholen der letztgenannten drei Schritte, um einen zusätzlichen Pulverkörper zu erhalten,
- Anordnen der Oberflächen (12) des Pulverkörpers (10) so, daß diese Oberflächen mit Ausnehmung und Vorsprung einander gegenüberliegen, indem sie winkelig durch Rotation in der Ebene der Oberflächen verlagert werden,
- Ausrichtung der Vorsprünge und Ausnehmungen derart, daß sie linear angeordnet sind und Verschieben derselben in gegenseitiges passendes Anstoßen,
- Erhitzen der zusammengefügten Pulverkörper auf eine Sintertemperatur von 1350°C bis 1500°C im Vakuum für einen Zeitraum von 0,5 bis 2h, und
- Abkühlen des gesinterten Körpers.

## Revendications

1. Une plaquette de coupe rapportée en matériau dur pour usinage par enlèvement de copeaux comprenant des tranchants ménagés à l'intersection entre les surfaces supérieure et inférieure opposées (21, 22) et une surface de bord (23) située entre les deux, ladite plaquette de coupe étant à double face, caractérisée en ce que la plaquette comprend deux ébauches identiques en poudre (10) qui sont liées métallurgiquement entre elles par frittage le long d'un plan médian (M) de manière que chacun des deux côtés venant en butée dans le plan médian (M) comprenne, au moins, une cavité (15) et, au moins, une saillie (16), qui sont séparées et disposées sur un cercle imaginaire dont le centre coïncide avec le centre (CL) de chaque ébauche, et que lesdites surfaces supérieure et inférieure (21, 22) intersectent ladite surface de bord (23) en formant un angle aigu (α).

2. Plaquette de coupe rapportée selon la revendication 1, caractérisée en ce que la cavité (15) et la saillie (16) sont de formes différentes lorsqu'elles sont observées en coupe transversale prise parallèlement au plan médian (M) et que la dimension de la cavité et de la saillie de chacune des deux ébauches, se réduit et augmente, respectivement, dans une direction orientée vers sa surface opposée audit plan médian.

3. Plaquette de coupe rapportée selon la revendication 1 ou 2, caractérisée en ce que la cavité (15) et la saillie (167) ont une forme égale ou complémentaire en coupe transversale, parallèlement audit plan médian (M) et que la dimension de la cavité et de la saillie de chacune desdites deux ébauches se réduit et augmente, respectivement, dans une direction allant vers sa surface opposée audit plan médian.

4. Plaquette de coupe rapportée code défini dans l'une quelconque des précédentes revendications, caractérisée en ce que la cavité (15), la saillie (16) et le centre (CL) de chaque ébauche sont situés sur une ligne droite imaginaire commune (L).

5. Plaquette de coupe rapportée comme défini dans l'une quelconque des précédentes revendications, caractérisée en ce que la cavité (15) est circulaire en coupe transversale et a une profondeur (d) par rapport au côté venant en butée (12) de l'ébauche concernée, et que la saillie (16) est en forme de pyramide tronquée prévue à une hauteur (h) par rapport audit côté en butée (12), de manière que les relations soient telles que ladite profondeur (d) soit plus grande que ladite hauteur (h), afin de former des vides (24) dans la plaquette de coupe.

6. Plaquette de coupe rapportée selon la revendication 5, caractérisée en ce que des capteurs sont prévus dans lesdits vides (24).

7. Plaquette de coupe rapportée selon la revendication 5 ou 6, caractérisée en ce qu'elle est pourvue d'un trou de fixation central (25) dont la dimension augmente ou se réduit en direction du plan médian (M) et que des vides (24) sont ménagés dans des emplacements séparés sur les côtés opposés du plan médian.

8. Plaquette de coupe rapportée selon la revendication 7, caractérisée en ce que les vides (24) communiquent avec un système de canaux à l'intérieur de la plaquette.

9. Procédé de fabrication d'une plaquette de coupe comme défini dans l'une quelconque des revendications 1 à 8, comprenant les étapes d'utilisation d'une presse à chambre de compactage, ladite presse comportant un poinçon et une matrice, comprenant les étapes suivantes:
- agencement d'un poinçon ou d'une matrice dont la surface active comprend, au moins, une cavité et une saillie,
- remplissage d'une quantité adéquate de poudre dans ladite chambre de compactage,
- compactage de la poudre pour obtenir une ébauche (10), dont le côté inférieur (12) a une forme inversée par rapport audit poinçon ou matrice, de manière à former une cavité (15) et une saillie (16) espacées, orientées de manière que la cavité (15), la saillie (16) et le centre (CL) du corps (10) soient situés sur une ligne droite imaginaire commune (L),
- enlèvement de ladite ébauche de la chambre,
- répétition des trois étapes mentionnées en dernier pour obtenir une ébauche supplémentaire,
- positionnement des surfaces (12) desdites ébauches (10) de manière que les surfaces comportant une cavité et une saillie soient tournées l'une vers l'autre, leur déplacement angulaire se faisant par rotation dans le plan desdites surfaces,
- orientation des saillies et des cavités de manière à ce qu'elles soient positionnées linéairement, et leur déplacement en butée l'une contre l'autre,
- chauffe des ébauches assemblées jusqu'à une température de frittage de 1350° à 1500°C, sous vide, pendant une période de temps de 0,5 à 2 h, et
- refroidissement de ladite ébauche frittée.
